(19) Europäisches Patentamt / European Patent Office / Office européen des brevets

(11) **EP 2 703 371 A1**

(12) **EUROPEAN PATENT APPLICATION**
published in accordance with Art. 153(4) EPC

(43) Date of publication:
05.03.2014 Bulletin 2014/10

(51) Int Cl.:
$C04B \ 38/06$ (2006.01)  $B01D \ 39/20$ (2006.01)
$B01D \ 46/00$ (2006.01)  $C04B \ 35/478$ (2006.01)
$F01N \ 3/022$ (2006.01)  $F01N \ 3/10$ (2006.01)
$F01N \ 3/28$ (2006.01)

(21) Application number: 12764509.1

(22) Date of filing: 09.03.2012

(86) International application number:
PCT/JP2012/056187

(87) International publication number:
WO 2012/132843 (04.10.2012 Gazette 2012/40)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 31.03.2011 JP 2011079080

(71) Applicant: Sumitomo Chemical Company Limited
Tokyo 104-8260 (JP)

(72) Inventors:
• KOBASHI Yasuharu
Niihama-shi, Ehime 792-8521 (JP)

• TOHMA Tetsuro
Niihama-shi, Ehime 792-8521 (JP)
• IWASAKI Kentaro
Wroclaw
PI 51-317 (PL)

(74) Representative: Vossius & Partner
Siebertstrasse 4
81675 München (DE)

(54) **HONEYCOMB STRUCTURE**

(57) A honeycomb structure 100 has a plurality of flow paths 110a and 110b which are partitioned by partition walls 120 and are substantially parallel to each other; and one end of the flow path 110a is plugged by a plugging part 130 at one end surface 100a of the honeycomb structure 100, and one end of the flow path 110b is plugged by a plugging part 130 at the other end surface 100b of the honeycomb structure 100, wherein, in an image of the partition walls 120 obtained by X-ray CT measurement, when the number of communicating holes detected when resolution of the image is 1.5 $\mu$m/pixel is defined as X, and the number of communicating holes detected when resolution of the image is 2.5 $\mu$m/pixel is defined as Y, Y/X is 0.58 or more.

**Fig.2**

EP 2 703 371 A1

## Description

**Technical Field**

The present invention relates to a honeycomb structure.

**Background Art**

At present, a honeycomb structure is used as a ceramic filter such as an exhaust gas filter for purifying an exhaust gas exhausted from an internal-combustion engine such as a diesel engine and a gasoline engine, a catalyst carrier, a filtration filter used for the filtration of food and drink such as beer, and a selective permeation filter for selectively permeating a gas component (for example, carbon monoxide, carbon dioxide, nitrogen and oxygen) produced during petroleum refining. Such a honeycomb structure has a plurality of flow paths which are partitioned by partition walls and are substantially parallel to each other (for example, refer to the following Patent Literature 1). A honeycomb structure is commercially available and mounted on a passenger car and the like.

**Citation List**

**Patent Literature**

Patent Literature 1: Japanese Patent Application Laid-Open Publication No. 2005-270755

Patent Literature 2: Japanese Patent Application Laid-Open Publication No. 2010-138770

**Summary of Invention**

**Technical Problem**

However, with respect to a conventional honeycomb structure, it is difficult to sufficiently suppress the increase in pressure loss as a material to be collected is collected in the honeycomb structure, in the case where a fluid containing the material to be collected flows into the honeycomb structure from one end side thereof and flows out from the other end side thereof. Therefore, for a honeycomb structure, it is required to reduce pressure loss as compared with prior art.

The present invention has been made in view of such actual circumstances, and an object of the present invention is to provide a honeycomb structure which can reduce pressure loss.

**Solution to Problem**

As a result of intensive studies, the present inventor has found that it is possible to control the pressure loss in a honeycomb structure by adjusting a specific parameter calculated based on the results of X-ray CT measurement. Further, the present inventor has found that it is possible to sufficiently reduce the pressure loss when the above parameter calculated based on the results of X-ray CT measurement is in a specific range.

Specifically, the honeycomb structure according to the present invention is a honeycomb structure having a plurality of flow paths that are partitioned by a partition wall and substantially parallel to each other, wherein, in an image of the partition wall obtained by X-ray CT measurement, when the number of communicating holes detected when resolution of the image is 1.5 $\mu$m/pixel is defined as X, and the number of communicating holes detected when resolution of the image is 2.5 $\mu$m/pixel is defined as Y, Y/X is 0.58 or more.

In the honeycomb structure according to the present invention, when the parameter Y/X which is obtained based on the image of the partition wall obtained by X-ray CT measurement is 0.58 or more, it is easy to reduce pressure loss as compared with prior art, and the pressure loss can be reduced as compared with prior art even when a material to be collected are accumulated in the communicating holes.

The cause by which the above effect is obtained in the present invention is unknown in detail, but the present inventor conjectures as follows. However, the cause is not limited to the following contents.

That is, it is easy to detect a relatively thin communicating hole when the resolution of the image of the partition wall obtained by X-ray CT measurement is 1.5 $\mu$m/pixel, because the resolution is higher as compared with the case where the resolution is 2.5 $\mu$m/pixel. On the other hand, it is hard to detect a relatively thin communicating hole when the resolution of the image of the partition wall obtained by X-ray CT measurement is 2.5 $\mu$m/pixel, because the resolution is lower as compared with the case where the resolution is 1.5 $\mu$m/pixel. Therefore, when the resolution is 1.5 $\mu$m/pixel, it is possible to detect a relatively thin communicating hole which is hard to be detected when the resolution is 2.5 $\mu$m/pixel. Thus, the number X of communicating holes obtained when the resolution is 1.5 $\mu$m/pixel includes the number of relatively thin communicating holes which are hard to be detected when the resolution is 2.5 $\mu$m/pixel in addition to the number Y of relatively thick communicating holes which are detected even when the resolution is 2.5 $\mu$m/pixel. Therefore, the Y/X shows the presence ratio of a relatively thick communicating hole in a partition wall.

The Y/X being 0.58 or more in the present invention means that the presence ratio of a relatively thick communicating hole is large as compared with the case where the Y/X is less than 0.58. When the presence ratio of a relatively thick communicating hole is large as described above, a fluid containing a material to be collected can easily pass through the communicating hole and it is possible to suppress that the fluid becomes harder to pass through a communicating hole as the material to be collected is collected, and therefore, it is possible to reduce pressure loss.

It is preferable that porosity of the partition wall be 30 to 70 volume%. It is preferable that average pore size of the partition wall be 5 to 25 $\mu$m. In these cases, it becomes easy to improve the collection efficiency of a material to be collected while reducing pressure loss.

It is preferable that the partition wall of the honeycomb structure according to the present invention contain aluminum titanate. In this case, it is possible to improve the durability of the honeycomb structure to thermal stress.

In the honeycomb structure according to the present invention, it is preferable that, in the partition wall, content of magnesium aluminum titanate be 85 to 99 mass%; content of aluminosilicate be 1 to 5 mass%; content of aluminum oxide be 5 mass% or less; and content of titanium dioxide be 5 mass% or less. In this case, it is possible to improve the durability of the honeycomb structure to thermal stress.

It is preferable that average thickness of the partition wall be 0.1 to 0.5 mm. In this case, it is possible to more highly achieve high collection efficiency and low pressure loss.

One end of a part of the plurality of flow paths and the other end of a remaining part of the plurality of flow paths in the honeycomb structure may be plugged. In this case, it is possible to further suitably use the honeycomb structure as a particulate filter which achieves purification of an exhaust gas by collecting fine particles (particulates) such as soot in the exhaust gas discharged from an internal-combustion engine such as a diesel engine and a gasoline engine.

**Advantageous Effects of Invention**

According to the honeycomb structure according to the present invention, pressure loss can be reduced as compared with prior art. Such a honeycomb structure is suitably used as a ceramic filter such as an exhaust gas filter, a filtration filter or a selective permeation filter.

**Brief Description of Drawings**

[Figure 1] Figure 1 is a perspective view showing a honeycomb structure according to one embodiment of the present invention.

[Figure 2] Figure 2 is an arrow view taken along the line II-II of Figure 1.

[Figure 3] Figure 3 is a view for describing the measuring method of pressure loss and the measuring method of collection efficiency.

[Figure 4] Figure 4 is a view showing an image obtained by X-ray CT measurement.

**Description of Embodiments**

Hereinafter, one suitable embodiment of the present invention will be described in detail with reference to drawings. The ratio of dimensions is not limited to those shown in the drawings.

<Honeycomb structure>

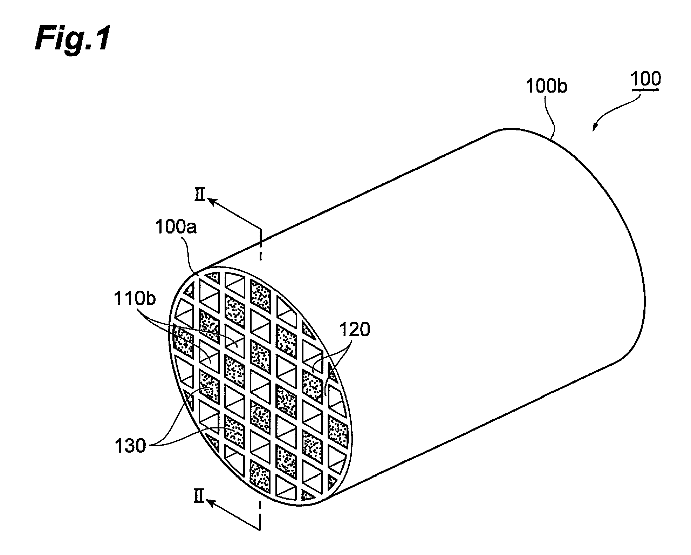

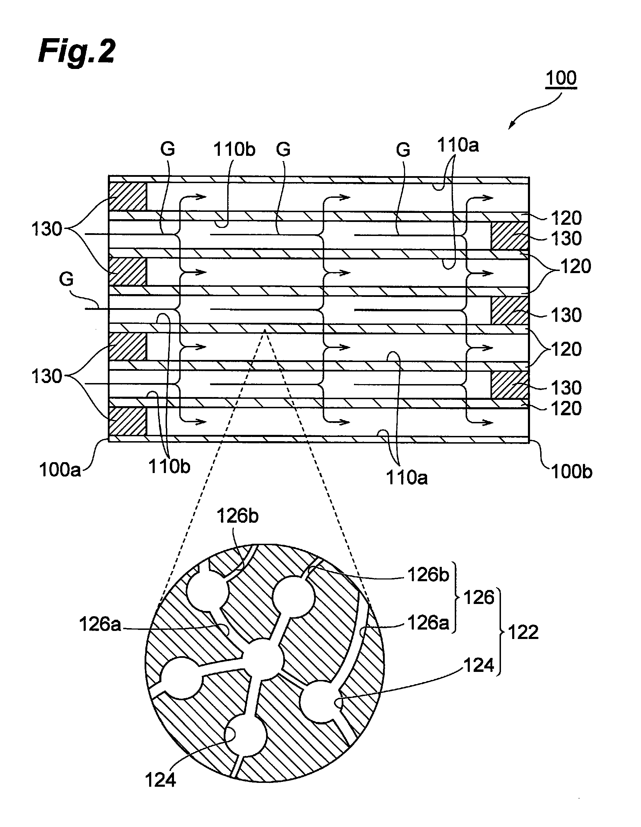

Figure 1 is a perspective view showing the honeycomb structure according to the present embodiment, and Figure 2 is an arrow view taken along the line II-II of Figure 1. A honeycomb structure 100 is a cylinder body having a plurality of flow paths 110a and 110b arranged substantially parallel to each other, as shown in Figures 1 and 2. The flow paths 110a and 110b are partitioned by partition walls 120 extending substantially parallel to the central axis of the honeycomb structure 100. One end of the flow path 110a constituting a part of the plurality of flow paths formed in the honeycomb structure 100 is plugged by a plugging part 130 at one end surface 100a of the honeycomb structure 100, and the other end of the flow path 110a is opened at the other end surface 100b of the honeycomb structure 100. On the other hand, one end of the flow path 110b constituting the remaining part of the plurality of flow paths formed in the honeycomb structure 100 is opened at one end surface 100a, and the other end of the flow path 110b is plugged by the plugging part 130 at the other end surface 100b. In the honeycomb structure 100, one end of the flow path 110b is opened as a gas inlet, and the other end of the flow path 110a is opened as a gas outlet.

In the honeycomb structure 100, the flow path 110a and the flow path 110b are alternately arranged to form a lattice structure. The plurality of flow paths 110a and 110b are perpendicular to both the end surfaces of the honeycomb structure 100 and arranged in a square as viewed from the end surfaces, that is, so that the central axes of flow paths 110a and 110b each may be located at a vertex of the square. The sectional shape of flow paths 110a and 110b is, for example, a square.

The length of the honeycomb structure 100 in the longitudinal direction of the flow paths 110a and 110b is, for example, 30 to 300 mm. When the honeycomb structure 100 is a cylinder body, the outer diameter of the honeycomb structure 100 is, for example, 10 to 300 mm. Further, the inside diameter (the length of a side of a square) of a section perpendicular to the longitudinal direction of the flow paths 110a and 110b is, for example, 0.5 to 1.2 mm.

The average thickness (cell wall thickness) of the partition wall 120 is preferably 0.1 to 0.5 mm, more preferably 0.15 to 0.40 mm. If the average thickness of the partition wall 120 is less than 0.1 mm, the communicating holes in the partition wall 120 will be short, and therefore, there is a tendency that the collection efficiency of a material to be collected is unlikely to be sufficiently improved and that the strength of the honeycomb structure 100 is reduced. If the average thickness of the partition wall 120 exceeds 0.5 mm, the communicating holes in the partition wall 120 will be long, and therefore, there is a tendency that it becomes difficult to reduce pressure loss. Note that the "average thickness" of the partition wall 120 refers to the average value of the thickness of the partition walls 120 between each flow path in the case of arbitrarily selecting 10 pairs of adjacent flow paths.

The porosity (open pore ratio) of the partition walls 120 is preferably 3 0 volume% or more, more preferably 35 volume% or more, from the point of view that the collection efficiency of a material to be collected becomes easy to improve while reducing pressure loss. The porosity of the partition walls 120 is preferably 70 volume% or less, more preferably 60 volume% or less, from the point of view that the collection efficiency of a material to be collected becomes easy to improve while reducing pressure loss. The average pore size (average pore diameter) of the partition walls 120 is preferably 5 $\mu$m or more, more preferably 8 $\mu$m or more, from the point of view that the collection efficiency of a material to be collected becomes easy to improve while reducing pressure loss. The average pore size of the partition walls 120 is preferably 25 $\mu$m or less, more preferably 20 $\mu$m or less, from the point of view that the collection efficiency of a material to be collected becomes easy to improve while reducing pressure loss. In particular, it is preferable that the porosity be 30 to 70 volume% and the average pore size be 5 to 25 $\mu$m. The porosity and the average pore size of the partition walls 120 can be controlled by the particle size of a raw material, the addition amount of a pore-forming agent, the type of a pore-forming agent and a sintering condition, and can be measured by a mercury intrusion technique.

The partition wall 120 is formed of a porous ceramic sintered body and has a structure through which a fluid (for example, a gas) can permeate. Specifically, many communicating holes (distribution channels) 122 through which a fluid can pass are formed in the partition wall 120, as shown in Figure 2. The communicating hole 122 is formed by the mutual communication of many pores and has large size pores 124 and pores 126 connecting between the large size pores 124. The pore 126 has a relatively thick pore 126a and a relatively thin pore 126b.

Here, the number of the communicating holes 122 that are present in the partition wall 120 can be measured using X-ray CT measurement as follows. First, a measuring sample is cut from the partition wall 120 of the honeycomb structure 100. Next, a three-dimensional image of the measuring sample is obtained by an X-ray CT scan. Subsequently, the obtained three-dimensional image is subjected to three-dimensional quantitative analysis, and the three-dimensional image is divided into faults (fault surfaces) composed of a plurality of voxel units arranged in one direction. In each fault, pores that are present in the fault is photographed.

Subsequently, depending on the proportion that pores occupy in a voxel, each voxel is sorted into a voxel in which the occupancy of pores is large and a voxel in which the occupancy of pores is small. Then, it is determined whether pores which are photographed in adjacent faults are communicating or not by determining that the pores are communicating when voxels in which the occupancy of pores is large are overlapped in the adjacent faults. Such operation is carried out from the front side to the back side of the measuring sample, and the number of communicating holes is calculated by determining the pores which are determined to be communicating from the front side to the back side as "communicating holes". Note that such a measuring method of X-ray CT measurement and an analyzing method of an image can be referred to Patent Literature 2.

In the present embodiment, analyses according to the above three-dimensional quantitative are carried out in the case where the resolution (scale) is high and the case where it is low, respectively. When the resolution is high, relatively thin communicating holes are easily detected together with relatively thick communicating holes. Thus, the number of communicating holes obtained when the resolution is high tends to represent the total of the number of relatively thick communicating holes and the number of relatively thin communicating holes. On the other hand, when the resolution is low, relatively thick communicating holes are detected, but relatively thin communicating holes are hardly detected. Thus, the number of the communicating holes obtained when the resolution is low hardly include the number of relatively thin communicating holes, and there is a tendency to represent the number of relatively thick communicating holes. Therefore, the ratio of the number of communicating holes obtained when the resolution is low to the number of communicating holes obtained when the resolution is high will represent the presence ratio of relatively thick communicating holes.

Note that the relatively thick communicating hole means a communicating hole in which the pore size of the pore constituting the communicating hole 122 is large and which is easily determined to be a "communicating hole" in the above three-dimensional quantitative analysis; and the relatively thin communicating hole means a communicating hole in which the pore size of the pore constituting the communicating hole 122 is small and which is hardly determined to be a "communicating hole" in the above three-dimensional quantitative analysis. For example, the communicating hole 122 which does not include a relatively thin pore 126b is easily determined to be a "communicating hole" in the three-dimensional quantitative analysis, and the communicating hole 122 which includes a relatively thin pore 126b is hardly determined to be a "communicating hole" in the three-dimensional quantitative analysis.

In the present embodiment, 1.5 $\mu$m/pixel is adopted as a high resolution because relatively thin communicating holes are easily observed. Further, in the present embodiment, 2.5 $\mu$m/pixel is adopted as a low resolution because the number of communicating holes sufficiently differentiated from the number of communicating holes obtained when the resolution is 1.5 $\mu$m/pixel is easily obtained.

When the number of communicating holes detected when the resolution is 1.5 $\mu$m/pixel is defined as X and the number of communicating holes detected when the resolution is 2.5 $\mu$m/pixel is defined as Y, a parameter Y/X means the presence ratio of relatively thick communicating holes which can be detected both at a resolution of 1.5 $\mu$m/pixel and 2.5 $\mu$m/pixel. The Y/X is 0.58 or more, preferably 0.59 or more, and more preferably 0.60 or more. The upper limit of Y/X is 1.00. The number of communicating holes X and Y can be controlled by the particle size of a raw material, the addition amount of a pore-forming agent, combined use of two or more types of pore-forming agents in which the particle size is different each other, and a sintering condition. For example, the parameter Y/X tends to be larger by increasing the amount of a pore-forming agent, selecting a pore-forming agent whose particle size is large, or increasing sintering temperature.

In the present embodiment, a three-dimensional image is obtained by X-ray CT measurement under conditions of, for example, a tube voltage of 60 kV, a tube current of 50 $\mu$A, a pixel number of 512 x 512 pixels, a visual field size of 0.8 mm$\phi$ x 0.8 mmh (height), and a resolution of 1.5 $\mu$m/pixel. Next, three-dimensional quantitative analysis is conducted under conditions of a pixel number of 512 x 512 pixels, a visual field size of 0.8 mm$\phi$ x 0.8 mmh, and a resolution of 1.5 $\mu$m/pixel to calculate the number X of communicating holes. Further, analysis conditions are changed, and three-dimensional quantitative analysis is conducted under conditions of a pixel number of 307 x 307 pixels, a visual field size of 0.8 mm$\phi$ x 0.8 mmh, and a resolution of 2.5 $\mu$m/pixel to calculate the number Y of communicating holes. Then, the parameter Y/X is calculated based on the number X and Y of communicating holes.

Note that the method of calculating the parameter Y/X is not limited to the method as described above, for example, a method of respectively carrying out three-dimensional quantitative analysis at a resolution of 1.5 $\mu$m/pixel and 2.5 $\mu$m/pixel after obtaining a three-dimensional image by the X-ray CT measurement at a resolution different from any of the resolutions of 1.5 $\mu$m/pixel and 2.5 $\mu$m/pixel, may be adopted. Further, a method of obtaining images by respectively carrying out the X-ray CT measurement for respective three-dimensional quantitative analyses at a resolution of 1.5 $\mu$m/pixel and 2.5 $\mu$m/pixel may be adopted.

The honeycomb structure 100 is suitable, for example, as a particulate filter which collects a fine particle such as soot contained in an exhaust gas from an internal-combustion engine such as a diesel engine and a gasoline engine. The particle size of fine particle is preferably 1 nm to 1 um, more preferably 1 nm to 0.3 $\mu$m.

For example, in the honeycomb structure 100, a gas G containing fine particles is supplied to the flow path 110b from the one end surface 100a, and then it passes through the communicating hole 122 in the partition wall 120, arrives at the adjacent flow path 110a, and is discharged from the other end surface 100b, as shown in Figure 2. At this time, the fine particles in the gas G are collected in the communicating hole 122 and removed from the gas G, and therefore, the honeycomb structure 100 functions as a filter.

When the honeycomb structure 100 is used as a filter for collecting fine particles, once fine particles are accumulated on the surface of the partition wall 120 or within the partition wall 120 (in the communicating hole 122), it is considered that new fine particles are accumulated on the same place as the accumulated fine particles in a manner they are preferentially stacked. In this case, when subjecting the honeycomb structure 100 to renewal combustion, a heating value will be large and thermal stress will be concentrated in the part where a large amount of fine particles is accumulated, which may result in possibility of causing heat breakage and dissolution loss of the partition wall 120. Therefore, when the honeycomb structure 100 is used for a certain period of time, renewal combustion will be performed before fine particles are accumulated in large amounts.

The partition wall 120 of the honeycomb structure 100 can be formed of various materials, but it is preferable that the partition wall 120 particularly contain aluminum titanate. For example, the partition wall 120 contains porous ceramics mainly composed of an aluminum titanate-based crystal. "Mainly composed of an aluminum titanate-based crystal" means that a main crystal phase constituting an aluminum titanate-based ceramic sintered body is an aluminum titanate-based crystal phase, and the aluminum titanate-based crystal phase may be, for example, an aluminum titanate crystal phase, a magnesium aluminum titanate crystal phase or the like.

When the partition wall 120 of the honeycomb structure 100 as described above contains aluminum titanate, it is possible to further increase the thermal shock resistance and mechanical strength of the honeycomb structure 100. Therefore, even when fine particles are subjected to renewal combustion in the state where the fine particles are accumulated in large amounts in the honeycomb structure 100, it is possible to suppress the damage of the honeycomb structure 100 caused by the thermal shock and the like resulting from the heat generated during the renewal combustion. Thus, it is possible to suppress fine particles from being subjected to renewal combustion whenever a small amount of fine particles is accumulated. That is, since it is not necessary to frequently subject the honeycomb structure 100 to renewal combustion, it becomes possible to use continuously until fine particles are accumulated in large amounts.

Further, it is possible to reuse the honeycomb structure 100 by renewal combustion after continuously using the honeycomb structure 100 as a filter for a long period of time until fine particles are accumulated in the communicating hole 122 and pressure loss reaches a predetermined value or more. This can improve the maintainability and can further improve the collection efficiency of fine particles.

In the honeycomb structure 100, for example, it is preferable that the content of each component in the partition wall 120 be adjusted as follows, so as to allow further improvement in the durability of the honeycomb structure 100 to the thermal stress.

Magnesium aluminum titanate: 85 to 99 mass%
Aluminosilicate: 1 to 5 mass%
Aluminum oxide: 5 mass% or less (0 to 5 mass%)
Titanium dioxide: 5 mass% or less (0 to 5 mass%)

The composition of the partition wall 120 of the honeycomb structure 100 can be represented, for example, by the composition formula: $Al_{2(1-x)}Mg_xTi_{(1+x)}O_5$, but the composition is not particularly limited. The partition wall 120 may contain a minor component that is derived from a raw material or inevitably contained in a production step. The value of x is preferably 0.03 or more, more preferably 0.03 to 0.15, and further preferably 0.03 to 0.12.

The partition wall 120 of the honeycomb structure 100 may contain a crystal pattern of alumina, titania or the like, in addition to a crystal pattern of aluminum titanate or magnesium aluminum titanate, in the X-ray diffraction spectrum.

The partition wall 120 of the honeycomb structure 100 may contain a phase (crystal phase) other than an aluminum titanate-based crystal phase. Examples of the phases (crystal phases) other than such an aluminum titanate-based crystal phase include a phase derived from a raw material used for the preparation of an aluminum titanate-based ceramic sintered body. More specifically, the phase derived from a raw material is a phase derived from aluminum source powder, titanium source powder, and/or magnesium source powder remained without forming an aluminum titanate-based crystal phase, in the case of producing the honeycomb structure 100 in accordance with the production method to be described below.

The partition wall 120 of the honeycomb structure 100 may contain a glass phase derived from silicon source powder when a raw material mixture contains the silicon source powder. The glass phase refers to an amorphous phase in which $SiO_2$ is a main component. In this case, the content of the glass phase is preferably 5 mass% or less, and preferably 2 mass% or more. By containing 5 mass% or less of the glass phase, an aluminum titanate-based ceramic sintered body that satisfies the pore characteristics required for ceramic filters such as a particulate filter can be easily obtained.

<Method for producing honeycomb structure>

The method for producing a honeycomb structure generally has the following steps (a), (b) and (c):

(a) Preparing a raw material mixture containing a ceramic powder and a pore-forming agent.
(b) Molding the raw material mixture to obtain a molded body.
(c) Sintering the molded body to obtain a honeycomb structure.

In the method for producing a honeycomb structure, the particle size of a raw material, the addition amount of a pore-forming agent, the type of a pore-forming agent and a sintering condition are adjusted in steps (a) to (c) so that Y/X may be 0.58 or more in the honeycomb structure obtained in step (c).

(Step (a))

In step (a), a ceramic powder and a pore-forming agent are mixed and then kneaded to prepare a raw material mixture. In the raw material mixture, various additives may be mixed other than the ceramic powder and the pore-forming agent. Examples of the additives include a binder, a plasticizer, a dispersing agent and a solvent.

Hereinafter, a method for producing a honeycomb structure containing aluminum titanate will be described as an example. The ceramic powder includes at least aluminum source powder and titanium source powder, and may further include magnesium source powder, silicon source powder and the like.

(Aluminum source powder)

Aluminum source powder is a powder of a compound to be an aluminum component constituting the honeycomb structure. Examples of the aluminum source powder include a powder of alumina (aluminum oxide). Examples of the crystal form of alumina include $\gamma$-type, $\delta$-type, $\theta$-type and $\alpha$-type, and an indefinite shape (amorphous) may be used. The crystal form of alumina is preferably $\alpha$-type.

The aluminum source powder may be a powder of a compound to be led to alumina by individually sintering it in the air. Examples of such a compound include an aluminum salt, aluminum alkoxide, aluminum hydroxide and metallic aluminum.

The aluminum salt may be an aluminum inorganic salt with an inorganic acid, or an aluminum organic slat with an organic acid. Specific examples of the aluminum inorganic salt include an aluminum nitrate salt such as aluminum nitrate and aluminum ammonium nitrate; and an aluminum carbonate salt such as aluminum ammonium carbonate. Examples of the aluminum organic salt include aluminum oxalate, aluminum acetate, aluminum stearate, aluminum lactate and aluminum laurate.

Specific examples of aluminum alkoxide include aluminum isopropoxide, aluminum ethoxide, aluminum sec-butoxide and aluminum tert-butoxide.

Examples of the crystal form of aluminum hydroxide include a gibbsite type, a bayerite type, a nordstrandite type, a boehmite type and a pseudoboehmite type, and may include an indefinite shape (amorphous). Examples of amorphous aluminum hydroxide include an aluminum hydrolysate obtained by hydrolyzing an aqueous solution of a water-soluble aluminum compound such as an aluminum salt and an aluminum alkoxide.

The aluminum source powder may be used alone or in combination of two or more. The aluminum source powder may contain a minor component that is derived from a raw material or inevitably contained in a production step.

The aluminum source powder is preferably an alumina powder, more preferably an $\alpha$-type alumina powder.

In the aluminum source powder, the particle size corresponding to a volume-based cumulative percentage of 50% (median particle diameter, D50) measured by laser diffractometry is preferably 20 to 60 $\mu$m. By adjusting the D50 of the aluminum source powder within this range, an aluminum titanate-based ceramic sintered body having excellent porosity can be obtained, and the sintering shrinkage can be more effectively reduced. The D50 of the aluminum source powder is more preferably 25 to 60 $\mu$m.

(Titanium source powder)

The titanium source powder is a powder of a compound to be a titanium component constituting a honeycomb structure, and examples thereof include a powder of titanium oxide. Examples of the titanium oxide include titanium(IV) oxide, titanium(III) oxide and titanium(II) oxide, and titanium(IV) oxide is preferred. The crystal form of titanium(IV) oxide include an anatase type, a rutile type and a brookite type. Titanium oxide may be indefinite shape (amorphous). Titanium oxide is more preferably an anatase type or rutile type titanium(IV) oxide.

The titanium source powder may be a powder of a compound to be led to titania (titanium oxide) by individually sintering it in the air, and examples thereof include a titanium salt, titanium alkoxide, titanium hydroxide, titanium nitride, titanium sulfide and titanium metal.

Examples of the titanium salt include titanium trichloride, titanium tetrachloride, titanium(IV) sulfide, titanium (VI) sulfide and titanium(IV) sulfate. Examples of the titanium alkoxide include titanium(IV) ethoxide, titanium(IV) methoxide, titanium(IV) t-butoxide, titanium(IV) isobutoxide, titanium(IV) n-propoxide, titanium(IV) tetraisopropoxide and a chelate compound thereof.

The titanium source powder may be used alone or in combination of two or more. The titanium source powder may contain a minor component that is derived from a raw material or inevitably contained in a production step.

The titanium source powder is preferably a titanium oxide powder, more preferably a titanium(IV) oxide powder.

In the titanium source powder, the particle size corresponding to a volume-based cumulative percentage of 50% (D50) measured by laser diffractometry is preferably 0.1 to 25 $\mu$m. The D50 of the titanium source powder is more preferably 1 to 20 $\mu$m in order to achieve sufficiently low sintering shrinkage.

The titanium source powder may have a bimodal particle size distribution. When using a titanium source powder having such a bimodal particle size distribution, the particle size of the particles forming a peak in which the particle size measured by laser diffractometry is larger is preferably 20 to 50 $\mu$m.

The mode diameter of the titanium source powder measured by laser diffractometry is generally 0.1 to 60 $\mu$m.

The molar ratio (aluminum source powder:titanium source powder) of the aluminum source powder in terms of $Al_2O_3$ (alumina) and the titanium source powder in terms of $TiO_2$ (titania) in a raw material mixture is preferably 35: 65 to 45:55, more preferably 40:60 to 45:55. By excessively using the titanium source powder relative to the aluminum source powder within the above range, it is possible to more effectively reduce the sintering shrinkage of the molded body of the raw material mixture.

(Magnesium source powder)

The raw material mixture used for producing the honeycomb structure can contain magnesium source powder. When the raw material mixture contains magnesium source powder, the aluminum titanate-based ceramic sintered body obtained is a sintered body containing a magnesium aluminum titanate crystal. The magnesium source powder include, besides a powder of magnesia (magnesium oxide), a powder of a compounds to be led to magnesia by individually sintering it in the air. Examples of such compounds include a magnesium salt, magnesium alkoxide, magnesium hydroxide, magnesium nitride and metal magnesium.

Examples of the magnesium salt include magnesium chloride, magnesium perchlorate, magnesium phosphate, magnesium pyrophosphate, magnesium oxalate, magnesium nitrate, magnesium carbonate, magnesium acetate, magnesium sulfate, magnesium citrate, magnesium lactate, magnesium stearate, magnesium salicylate, magnesium myristate, magnesium gluconate, magnesium dimethacrylate and magnesium benzoate.

Examples of the magnesium alkoxide include magnesium methoxide and magnesium ethoxide.

As the magnesium source powder, a powder of a compound which serves both as a magnesium source and an aluminum source can be used. Examples of such a compound include magnesia spinel ($MgAl_2O_4$).

When using a powder of a compound which serves both as a magnesium source and an aluminum source as the magnesium source powder, the molar ratio of the total amount of the amount of the aluminum source powder in terms of $Al_2O_3$ (alumina) and the amount of the Al component in terms of $Al_2O_3$ (alumina) contained in the powder of the compound which serves both as a magnesium source and an aluminum source to the amount of titanium source powder in terms of $TiO_2$ (titania) is adjusted so as to be within the above range in the raw material mixture.

The magnesium source powder may be used alone or in combination of two or more. The magnesium source powder may contain a minor component that is derived from a raw material or inevitably contained in a production step.

In the magnesium source powder, the particle size corresponding to a volume-based cumulative percentage of 50% (D50) measured by laser diffractometry is preferably 0.5 to 30 $\mu$m. The D50 of the magnesium source powder is more preferably 3 to 20 $\mu$m from the point of view of reducing the sintering shrinkage of a molded body.

The content of the magnesium source powder in terms of MgO (magnesia) in the raw material mixture is preferably 0.03 to 0.15, more preferably 0.03 to 0.12 in a molar ratio relative to the total amount of the aluminum source powder in terms of $Al_2O_3$ (alumina) and the titanium source powder in terms of $TiO_2$ (titania). By adjusting the content of the magnesium source powder within this range, it is possible to relatively easily obtain an aluminum titanate-based ceramic sintered body having a large pore size and porosity in which heat resistance is further improved.

(Silicon source powder)

The raw material mixture may further contain silicon source powder. The silicon source powder is a powder of a compound which is contained in an aluminum titanate-based ceramic sintered body as a silicon component, and it is possible to obtain an aluminum titanate-based ceramic sintered body in which heat resistance is further improved by the combined use of the silicon source powder. Examples of the silicon source powder include a powder of silicon oxide (silica) such as silicon dioxide and silicon monoxide.

The silicon source powder may be a powder of a compound to be led to silica by individually sintering it in the air. Examples of such a compound include silicic acid, silicon carbide, silicon nitride, silicon sulfide, silicon tetrachloride, silicon acetate, sodium silicate, sodium orthosilicate, feldspar and glass frit, feldspar and glass frit are preferred, and glass frit is more preferred in that it is industrially easily available and its composition is stable. The glass frit refers to a flake or powdered glass obtained by pulverizing glass. It is also preferable to use a powder composed of a mixture of feldspar and glass frit as the silicon source powder.

When using glass frit, the yield point of the glass frit is preferably 600°C or more from the point of view of further improving the resistance to thermal decomposition of the aluminum titanate-based ceramic sintered body obtained. In the present specification, the yield point of glass frit is defined as a temperature (°C) at which shrinkage starts after that the expansion of glass frit is measured from a low temperature using an apparatus for Thermo Mechanical Analysis (TMA); and the expansion stops.

As a glass constituting the glass frit, it is possible to use a typical silicate glass containing silicic acid [$SiO_2$] as a main component (50 mass% or more in the total components). The glass constituting the glass frit may contain, as other components to be contained, alumina [$Al_2O_3$], sodium oxide [$Na_2O$], potassium oxide [$K_2O$], calcium oxide [$CaO$], magnesia [$MgO$] and the like, as is the case with a typical silicate glass. Further, the glass constituting the glass frit may contain $ZrO_2$ in order to improve the hot water resistance of the glass itself.

The silicon source powder may be used alone or in combination of two or more. The silicon source powder may contain a minor component that is derived from a raw material or inevitably contained in a production step.

In the silicon source powder, the particle size corresponding to a volume-based cumulative percentage of 50% (D50) measured by laser diffractometry is preferably 0.5 to 30 $\mu$m. The D50 of the silicon source powder is more preferably 1 to 20 $\mu$m in order to further improve the filling rate of a molded body to thereby obtain a sintered body in which the mechanical strength is further increased.

When a raw material mixture contains silicon source powder, the content of the silicon source powder in the raw material mixture is generally 0.1 to 10 parts by mass, preferably 0.1 to 5 parts by mass in terms of $SiO_2$ (silica) relative to 100 parts by mass of the total amount of the aluminum source powder in terms of $Al_2O_3$ (alumina) and the titanium source powder in terms of $TiO_2$ (titania).

In the production of the honeycomb structure, it is possible to use, as a raw material powder, a compound containing two or more metal elements among titanium, aluminum, silicon and magnesium as the components, like a composite oxide such as the above magnesia spinel ($MgAl_2O_4$). It can be considered that such a compound is the same as a raw material mixture in which respective metal source compounds are mixed. Based on such an idea, the content of the aluminum source, the titanium source, the magnesium source and the silicon source in the raw material mixture is adjusted in the range as described above.

Aluminum titanate and magnesium aluminum titanate may be contained in the raw material mixture. For example, when using magnesium aluminum titanate as a component of the raw material mixture, the magnesium aluminum titanate corresponds to a raw material mixture which serves as a titanium source, an aluminum source and a magnesium source.

Aluminum titanate and magnesium aluminum titanate may be prepared from a honeycomb structure obtained by the present production method. For example, when the honeycomb structure obtained by the present production method is damaged, it is possible to use a powder obtained by pulverizing the damaged honeycomb structure, its fragment or the like. It is possible to use the powder obtained by pulverization as a magnesium aluminum titanate powder.

(Pore-forming agent)

As a pore-forming agent, it is possible to use those formed of a material that disappears at a sintering temperature for sintering a molded body or less in step (c). In degreasing or sintering, if a molded body containing a pore-forming agent is heated, the pore-forming agent will disappear by combustion or the like. Thereby, spaces are formed in the place where the pore-forming agent was present and ceramic powder located between these spaces shrinks during the sintering, and therefore, a communicating hole which can pass a fluid in the partition wall 120 of the honeycomb structure can be formed.

In the method for producing a honeycomb structure, it is possible to use a first pore-forming agent (hereinafter referred to as a "pore-forming agent A") to be described below in order to form a predetermined communicating hole. Examples of the pore-forming agents A include corn starch, barley starch, wheat starch, tapioca starch, bean starch, rice starch, pea starch, sago starch and canna starch.

The $DA_{50}$ of the pore-forming agent A is preferably 5 to 25 um, more preferably 5 to 20 $\mu$m. The $DA_{10}$ of the pore-forming agent A is preferably 1 to 15 $\mu$m, more preferably 5 to 10 $\mu$m. The $DA_{90}$ of the pore-forming agent A is preferably 25 to 40 $\mu$m, more preferably 25 to 30 $\mu$m. Note that $DA_{10}$, $DA_{50}$ and $DA_{90}$ represent the particle size in which the proportion of the cumulative mass, in which the mass of particles from the particles with a small particle size to the particles with a large particle size in the particle size distribution measured by laser diffractometry is added up, is 10%, 50% and 90%, respectively.

The content of the pore-forming agent A in the raw material mixture is preferably 1 to 25 parts by mass, more preferably 5 to 10 parts by mass relative to 100 parts by mass of the ceramic powder. When the content of the pore-forming agent A is in this range, it will be easy to prevent the occurrence of leakage of a material to be collected (for example, fine particles) while suppressing the initial pressure loss to a low level. When the content of the pore-forming agent A is less than 1 part by mass relative to 100 parts by mass of the ceramic powder, there will be a tendency that the pressure loss is higher because the number of pores formed in the partition wall 120 is reduced. On the other hand, when the content of the pore-forming agent A is more than 25 parts by mass relative to 100 parts by mass of the ceramic powder, there will be a tendency that the proportion of the pores formed in the partition wall 120 is excessively high, and therefore, the leakage of a material to be collected easily occurs.

The pore-forming agent A can be used in combination with a pore-forming agent such as a second pore-forming agent (hereinafter referred to as a "pore-forming agent B") to be described below. The particle size of the pore-forming agent B is preferably larger as compared with the particle size of the pore-forming agent A. For example, when the pore-forming agent A is wheat starch, the pore-forming agent B is preferably potato starch (white potato starch).

The $DB_{50}$ of the pore-forming agent B is preferably 30 to 50 um, more preferably 35 to 45 $\mu$m. The $DB_{10}$ of the pore-forming agent B is preferably 10 to 30 $\mu$m, more preferably 15 to 25 $\mu$m. The $DB_{90}$ of the pore-forming agent B is preferably 50 to 100 $\mu$m, more preferably 60 to 80 $\mu$m. Note that $DB_{10}$, $DB_{50}$ and $DB_{90}$ represent the particle size in which the proportion of the cumulative mass, in which the mass of particles from the particles with a small particle size to the particles with a large particle size in the particle size distribution measured by laser diffractometry is added up, is 10%, 50% and 90%, respectively.

It is possible to enlarge the average pore size by using the pore-forming agent B. In this case, the content of the pore-forming agent B in the raw material mixture is preferably 1 to 30 parts by mass, more preferably 5 to 20 parts by mass relative to 100 parts by mass of the ceramic powder.

In the production of the honeycomb structure, organic components (additives) such as a binder, a plasticizer, a dispersing agent and a solvent may be blended with the raw material mixture in addition to the ceramic powder and the pore-forming agent as described above.

Examples of the binder include celluloses such as methylcellulose, carboxymethylcellulose and sodium carboxymethylcellulose; alcohols such as polyvinyl alcohol; salt such as lignin sulfonate; and wax such as paraffin wax and microcrystalline wax. The content of the binder in the raw material mixture is generally 20 parts by mass or less, preferably 15 parts by mass or less relative to 100 parts by mass of the total amount of the aluminum source powder, the titanium source powder, the magnesium source powder and the silicon source powder.

Examples of the plasticizer include alcohols such as glycerin; higher fatty acid such as caprylic acid, lauric acid, palmitic acid, arachic acid, oleic acid and stearic acid; metal stearates such as Al stearate, and polyoxyalkylene alkyl ether. The content of the plasticizer in the raw material mixture is generally 0 to 10 parts by mass, preferably 1 to 5 parts by mass relative to 100 parts by mass of the total amount of the aluminum source powder, the titanium source powder, the magnesium source powder and the silicon source powder.

Examples of the dispersing agent include inorganic acids such as nitric acid, hydrochloric acid and sulfuric acid; organic acids such as oxalic acid, citric acid, acetic acid, malic acid and lactic acid; alcohols such as methanol, ethanol and propanol; and surfactants such as ammonium polycarboxylate. The content of the dispersing agent in the raw material mixture is generally 0 to 20 parts by mass, preferably 2 to 8 parts by mass relative to 100 parts by mass of the total amount of the aluminum source powder, the titanium source powder, the magnesium source powder and the silicon source powder.

A solvent is generally water, and preferably ion exchange water in that impurities are small. The content of the solvent in the raw material mixture is generally 10 to 100 parts by mass, preferably 20 to 80 parts by mass relative to 100 parts by mass of the total amount of the aluminum source powder, the titanium source powder, the magnesium source powder and the silicon source powder.

(Step (b))

In step (b), a ceramic molded body of a predetermined shape having a honeycomb structure is obtained. In step (b), for example, it is possible to adopt a so-called extrusion molding method which extrudes a raw material mixture using a single screw extruder from a die while kneading.

The molded body extruded from the die may be plugged at one end of each flow path (through hole). In this case, it is possible to obtain the above honeycomb structure 100. For example, the same mixture as the above raw material mixture may be filled in the flow path to be plugged. When a plasticizer is added as an additive to the raw material mixture, many plasticizers can be operated also as a lubricant for reducing friction between the raw material mixture and a die when extruding the raw material mixture from the die. For example, each plasticizer as described above can be operated as a lubricant.

(Step (c))

In step (c), degreasing (calcination) for removing the pore-forming agent and the like contained in a molded body (in the raw material mixture) may be performed before sintering of the molded body. Degreasing is performed in the atmosphere of an oxygen concentration of 0.1 % or less.

The "%" used as the unit of oxygen concentration in the present specification means "volume %". By controlling the oxygen concentration in a degreasing step (during the temperature rising) to a concentration of 0.1% or less, generation of heat from an organic substance is suppressed and a crack after degreasing can be suppressed. In the degreasing, it is preferable that the degreasing be performed in the atmosphere of an oxygen concentration of 0.1% or less, and thereby, a part of organic components such as a pore-forming agent be removed, and the remaining part be carbonized and remain in a ceramic molded body. Thus, since a very small amount of carbon remains in the ceramic molded body, the strength of the molded body is improved, and therefore, the charging of the ceramic molded body to the sintering step becomes easy. Examples of such an atmosphere include an inert gas atmosphere such as nitrogen gas and argon gas, a reducing gas atmosphere such as carbon monoxide gas and hydrogen gas, and a vacuum. Further, the sintering may be performed in an atmosphere in which water vapor partial pressure is reduced, or may be performed by steaming along with charcoal to reduce the oxygen concentration.

The highest temperature of degreasing is preferably 700 to 1100°C, more preferably 800 to 1000°C. Since the strength of a ceramic molded body after degreasing is improved by increasing the highest temperature of degreasing from a conventional temperature of about 600 to 700°C to a temperature of 700 to 1100°C to thereby grow particles, the charging of the ceramic molded body to sintering becomes easy. Further, in the degreasing, it is preferable to suppress the temperature rising rate until the highest temperature is reached as much as possible in order to prevent a crack of the ceramic molded body.

The degreasing is performed using the same furnace as that used for common sintering such as a tubular electric furnace, a box-type electric furnace, a tunnel furnace, a far-infrared furnace, a microwave heating furnace, a shaft furnace, a reverberatory furnace, a rotary furnace, a roller hearth furnace and a gas combustion furnace. The degreasing may be performed in a batch process or a continuous process. Further, the degreasing may be performed in a still standing type process or in a fluid type process.

The time required for the degreasing may be a time sufficient for a part of the organic components contained in the ceramic molded body to disappear, and is preferably a time for 90 to 99 mass% of the organic components contained in the ceramic molded body to disappear. Specifically, the highest temperature-keeping time differs depending on the amount of a raw material mixture, the type of a furnace used for degreasing, temperature conditions, atmosphere and the like, but it is generally 1 minute to 10 hours, preferably 1 to 7 hours.

The ceramic molded body is sintered after the above degreasing. The sintering temperature is generally 1300°C or more, preferably 1400°C or more. Further, the sintering temperature is generally 1650°C or less, preferably 1550°C or less. The temperature rising rate to the sintering temperature is not particularly limited, but it is generally 1 to 500°C/hour. When using the silicon source powder, it is preferable to provide a step of keeping a temperature range of 1100 to 1300°C for 3 hours or more before the sintering step. Thereby, it is possible to promote the melting and diffusion of the silicon source powder.

It is preferable that the sintering be performed in the atmosphere of an oxygen concentration of 1 to 6%. Since it is possible to suppress the combustion of residual carbide produced in the degreasing by adjusting the oxygen concentration to 6% or less, a crack of the ceramic molded body in the sintering tends to hardly occur. Further, since a suitable amount of oxygen is present, it is possible to completely remove the organic components of the aluminum titanate-based ceramic molded body finally obtained. The oxygen concentration is preferably 1% or more because a carbide (soot) derived from the organic components does not remain in the aluminum titanate-based ceramic sintered body obtained. The sintering may be performed in an inert gas such as nitrogen gas and argon gas or in a reducing gas such as carbon monoxide gas and hydrogen gas depending on the type and the use amount ratio of the raw material mixture, that is, the aluminum source powder, the titanium source powder, the magnesium source powder and the silicon source powder. Further, the sintering may be performed in an atmosphere in which water vapor partial pressure is reduced.

The sintering is generally performed using a conventional apparatus such as a tubular electric furnace, a box-type electric furnace, a tunnel furnace, a far-infrared furnace, a microwave heating furnace, a shaft furnace, a reverberatory furnace, a rotary furnace, a roller hearth furnace and a gas combustion furnace. The sintering may be performed in a batch process or a continuous process. Further, the sintering may be performed in a still standing type process or in a fluid type process.

The sintering time may be a time sufficient for a ceramic molded body to change to an aluminum titanate-based crystal, and it is generally 10 minutes to 24 hours although it differs depending on the amount of a raw material, the type of a sintering furnace, a sintering temperature, a sintering atmosphere and the like.

It is possible to obtain a honeycomb structure which is an aluminum titanate-based ceramic sintered body by performing the above steps in order. The honeycomb structure has a shape in which the shape of a molded body immediately after molding is almost maintained, but it may also be processed to a desired shape by subjecting it to grinding processing or the like after sintering.

**Examples**

Hereinafter, the present invention will be described in more detail with reference to Examples, but the present invention is not limited to these Examples.

<Example 1>

The following were used as raw material powders.

(1) Aluminum source powder

Aluminum oxide powder ($\alpha$-alumina powder) in which the median particle diameter (D50) is 29 $\mu$m: 38.48 parts by mass

(2) Titanium source powder

Titanium oxide powder (rutile type crystal) in which D50 is 1.0 $\mu$m: 41.18 parts by mass

(3) Magnesium source powder

Magnesium oxide powder in which D50 is 3.4 $\mu$m: 2.75 parts by mass

(4) Silicon source powder

Glass frit (yield point: 642°C) in which D50 is 8.5 $\mu$m: 3.29 parts by mass

(5) Pore-forming agent (wheat starch powder): 6 parts by mass

Pore-forming agent (white potato starch powder): 10 parts by mass [0109] Note that the particle size corresponding to a volume-based cumulative percentage of 50% (D50) of the raw material powder was measured using a laser diffraction particle size distribution measuring device (Microtrac HRA (X-100): manufactured by Nikkiso Co., Ltd.).

The charge composition of the raw material powders was $[Al_2O_3]/[TiO_2]/[MgO]/[SiO_2]$ = 35.1%/51.3%/9.6%/4.0% in a molar ratio in terms of alumina $[Al_2O_3]$, titania $[TiO_2]$, magnesia [MgO] and silica $[SiO_2]$. Further, the content of the silicon source powder in the total amount of the aluminum source powder, the titanium source powder, the magnesium source powder and the silicon source powder was 4.0 mass%.

To 100 parts by mass of a mixture consisting of the aluminum source powder, the titanium source powder, the magnesium source powder, the silicon source powder and the pore-forming agent, 5.49 parts by mass of methylcellulose and 2.35 parts by mass of hydroxymethylcellulose as a binder and 0.40 part by mass of glycerin and 4.64 parts by mass of polyoxyethylene polyoxypropylene butyl ether as a lubricant were added. Further, 29.03 parts by mass of water was added thereto as a dispersion medium, and extrusion was then performed using a kneading extruder to form a honeycomb-shaped ceramic molded body (cell density: 300 cpsi, cell wall thickness: 0.3 mm). The molded body is a cylinder body having 25 mm in diameter and 50 mm in height, and it was formed so as to have many flow paths (sectional shape: a square, sectional inside diameter: 0.6 mm) in the height direction.

Sintering including a calcination (degreasing) step of removing a binder was applied to the molded body in the air atmosphere to obtain a honeycomb-shaped porous sintered body (honeycomb structure). The highest temperature during the sintering was 1500°C, and the holding time at the highest temperature was 5 hours.

The obtained honeycomb structure was ground in a mortar to obtain a powder, and the diffraction spectrum of the obtained powder was then measured by the powder X-ray diffractometry, resulting that the powder showed a crystal peak of magnesium aluminum titanate.

<Example 2>

A honeycomb structure was obtained by performing the same operations as in Example 1 except that the amount the wheat starch powder (pore-forming agent) was changed to 16 parts by mass, and the amount of the white potato starch powder (pore-forming agent) was changed to 0 part by mass. When the diffraction spectrum was measured by the powder X-ray diffractometry in the same manner as in Example 1, the powder showed a crystal peak of magnesium aluminum titanate.

<Comparative Example 1>

A commercially available aluminum titanate-based DPF (Diesel particulate filter) was used as a honeycomb structure.

<Characterization>

(1) AT conversion ratio

When the honeycomb structures of Examples 1 and 2 were measured for the aluminum titanate conversion ratio (AT conversion ratio), the AT conversion ratio of Example 1 was 100%, and the AT conversion ratio of Example 2 was 100%.

Note that the AT conversion ratio was calculated by the following formula (1) from the integrated intensity (IT) of the peak (titania-rutile phase (110) surface) appearing at a position of $2\theta = 27.4°$ and the integrated intensity ($I_{AT}$) of the peak [magnesium aluminum titanate phase (230) surface] appearing at a position of $2\theta = 33.7°$ in a powder X-ray diffraction spectrum of the powder obtained by grinding the honeycomb structures of Examples 1 and 2 in a mortar.

$$\text{AT conversion ratio (\%)} = I_{AT}/(I_T + I_{AT}) \times 100 \ \dots \ (1)$$

(2) Pore distribution

The honeycomb structures of Examples 1 and 2 and Comparative Example 1 were measured for the pore distribution under the following conditions. First, 0.4 g of a honeycomb structure was ground, and small pieces of about 2 mm squares obtained were dried at 120°C for 4 hours using an electric furnace in the air. Then, pore diameters were measured by a mercury intrusion technique in a range of 0.005 to 200.0 $\mu$m to determine cumulative pore volume $V_{total}$ (ml/g) and an average pore diameter ($\mu$m). "Auto-pore III9420" manufactured by Micromeritics Instrument Corporation was used as a measurement device.

Further, the porosity of the porous material (honeycomb structure) was determined by the following formula (2) from the obtained cumulative pore volume $V_{total}$.

$$\text{Porosity (\%)} = 100 \times (1 - 1/(1 + V_{total} \times D)) \ \dots \ (2)$$

Note that D in formula (2) represents the density (g/cm$^3$) of a ceramic body, and the porosity was calculated by defining a density of common aluminum titanate of 3.7 g/cm$^3$ as D.

(3) X-ray CT

Test pieces were cut from the partition walls of the honeycomb structures of Examples 1 and 2 and Comparative Example 1, and the X-ray CT measurement was performed under the following measurement conditions by using the test pieces as measuring samples. Note that the size of the test piece was 1.0 mm x 2.0 mm x 0.3 mm.

(Measurement conditions)

    a) Using device: Three-dimensional measurement X-ray CT scanner TDM1000-IS/SP (manufactured by Yamato Scientific Co., Ltd.)
    b) Tube voltage: 60 kV
    c) Tube current: 50 $\mu$A
    d) Pixel number: 512 x 512 pixels
    e) Visual field size: 0.8 mm$\phi$ x 0.8 mmh (height)
    f) Resolution: 1.5 $\mu$m/pixel

The number X (piece) of communicating holes was calculated by performing the three-dimensional quantitative analysis of the three-dimensional image obtained by X-ray CT measurement under the conditions of a pixel number of 512 x 512 pixels, a visual field size of 0.8 mm$\phi$ x 0.8 mmh and a resolution of 1.5 $\mu$m/pixel. Further, the number Y (piece) of communicating holes was calculated by performing the three-dimensional quantitative analysis of the three-dimensional image obtained by X-ray CT measurement under the conditions of a pixel number of 307 x 307 pixels, a visual field size of 0.8 mm$\phi$ x 0.8 mmh and a resolution of 2.5 $\mu$m/pixel. Quantitative analysis software TRI/3D-BON (manufactured by Ratoc System Engineering Co., Ltd.) was used for the three-dimensional quantitative analysis. Then, the parameter Y/X was calculated based on the number X (piece) of communicating holes and the number Y (piece) of communicating holes.

(4) Collection efficiency (soot leakage)

The honeycomb structures of Examples 1 and 2 and Comparative Example 1 were measured for the collection efficiency (soot leakage) as follows.

(Hollow piece)

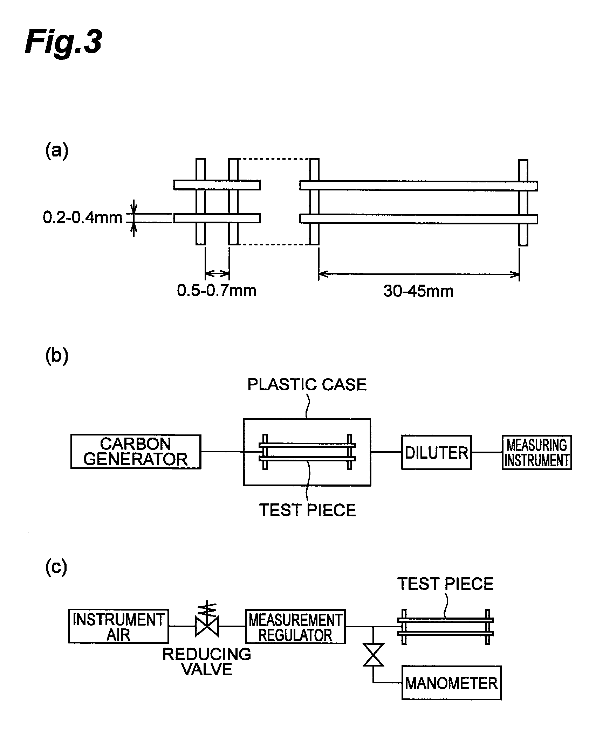

A hollow piece (refer to Figure 3 (a)) used for measuring pressure loss was cut from a honeycomb structure. The hollow piece was a pillar-shaped hollow piece having a double-cross-shaped section as shown in Figure 3 (a). Specifically, the hollow piece was cut in a shape including one cell which the honeycomb structure has and cell walls surrounding the four sides of the cell (that is, cell walls to partition adjacent cells). The hollow piece has a through hole (cell) which passes through the hollow piece in the longitudinal direction of the hollow piece. The thickness of the cell wall was 0.2 to 0.4 mm, and the sectional shape of the through hole was a square of 0.5 to 0.7 mm in both the vertical and horizontal directions. The length of the hollow piece was 30 to 45 mm.

(Measuring method)

In the collection efficiency measurement, one of the open ends of the through hole of the above hollow piece was first sealed with an epoxy resin to prepare a test piece having a flow path therein. Next, as shown in Figure 3 (b), after arranging the test piece in a plastic case, the open end of the flow path in the test piece was connected to a carbon generator (DNP-2000 manufactured by PALAS Corporation; the average particle size of carbon particles (soot) being 60 nm), and the leakage test was performed. The number concentration of the carbon particles 180 seconds after the carbon particles generated from the carbon generator start to pass through the flow path of the test piece was measured using a diluter (MD-19-1E, manufactured by Matter Corporation) and a measuring instrument (EEPS-3000, manufactured by TSI Corporation). Note that it is shown that the lower the number concentration of the carbon particles after passing through the test piece, the higher the collection performance as a particulate filter.

(5) Pressure loss

The honeycomb structures of Examples 1 and 2 and Comparative Example 1 were measured for the pressure loss as follows.

(Pressure measurement)

In the pressure measurement, a test piece in which the carbon particles were accumulated in the same manner as in the measurement of collection efficiency (4) was first prepared. Next, as shown in Figure 3 (c), the open end of the flow path was connected to a supply source of instrument air through a reducing valve and a measurement regulator. Then, the difference (differential pressure: $\Delta P$ (kPa)) between a pressure value when instrument air (pressure value: 1 MPa) was allowed to flow into the test piece at each flow rate value of 250 ml/min, 500 ml/min, 750 ml/min or 950 ml/min and an atmospheric pressure value was determined with a manometer.

(Evaluation method)

A gradient G calculated as follows was used as an index representing the pressure loss. First, the gas flow rate u ($ms^{-1}$) passing through the cell wall at each flow rate was calculated from the dimension area. Next, after plotting the differential pressure value $\Delta P/u$ relative to the gas flow rate u to obtain a straight line, the gradient G of the obtained straight line (kPa/($ms^{-1}$)) was calculated. That is, it is shown that the lower the value of the gradient G is, the lower the pressure loss before and after the test piece and the higher the filter performance.

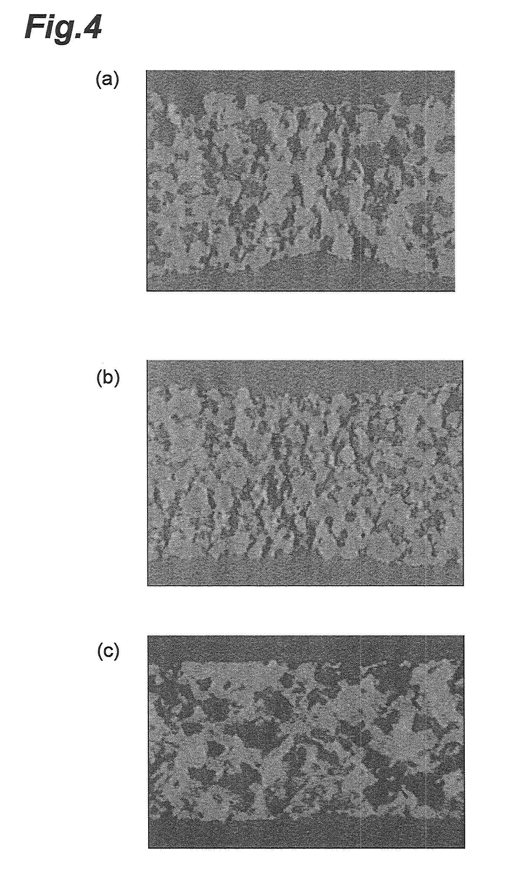

The results of the measurement of pore distribution, X-ray CT, collection efficiency and pressure loss are shown in Table 1. Further, an image obtained by X-ray CT measurement is shown as Figure 4. Note that Figure 4 (a) is an image of the test piece of Example 1; Figure 4 (b) is an image of the test piece of Example 2; and Figure 4 (c) is an image of the test piece of Comparative Example 1.

[Table 1]

| | Porosity | Pore size | X-ray CT | | | Collection efficiency | Pressure loss after soot accumulation |
|---|---|---|---|---|---|---|---|
| | % | μm | X | Y | Y/X | % | kPa m⁻¹s |
| Example 1 | 45.20 | 16.8 | 91553 | 54542 | 0.60 | 84 | 18 |
| Example 2 | 43.50 | 12.2 | 141167 | 84313 | 0.60 | 82 | 22 |
| Comparative Example 1 | 48.22 | 13.3 | 61219 | 34394 | 0.56 | 72 | 41 |

**Industrial Applicability**

The honeycomb structure according to the present invention can be used as a filter for purifying an exhaust gas exhausted from an internal-combustion engine such as a diesel engine and a gasoline engine. The honeycomb structure according to the present invention can also be used for an aftertreatment apparatus of an exhaust gas discharged from an incinerator, petroleum refining facilities, an external-combustion engine or the like.

**Reference Signs List**

100: Honeycomb structure, 110a, 110b: Flow path, 120: Partition wall, 122: Communicating hole.

**Claims**

1. A honeycomb structure having a plurality of flow paths that are partitioned by a partition wall and substantially parallel to each other,
   wherein, in an image of the partition wall obtained by X-ray CT measurement, when number of communicating holes detected when resolution of the image is 1.5 μm/pixel is defined as X, and number of communicating holes detected when resolution of the image is 2.5 μm/pixel is defined as Y, Y/X is 0.58 or more.

2. The honeycomb structure according to claim 1, wherein porosity of the partition wall is 30 to 70 volume%.

3. The honeycomb structure according to claim 1 or 2, wherein average pore size of the partition wall is 5 to 25 μm.

4. The honeycomb structure according to any one of claims 1 to 3, wherein the partition wall contains aluminum titanate.

5. The honeycomb structure according to any one of claims 1 to 4, wherein, in the partition wall, content of magnesium aluminum titanate is 85 to 99 mass%, content of aluminosilicate is 1 to 5 mass%, content of aluminum oxide is 5 mass% or less, and content of titanium dioxide is 5 mass% or less.

6. The honeycomb structure according to any one of claims 1 to 5, wherein average thickness of the partition wall is 0.1 to 0.5 mm.

7. The honeycomb structure according to any one of claims 1 to 6, wherein one end of a part of the plurality of flow paths and the other end of a remaining part of the plurality of flow paths are plugged.

EP 2 703 371 A1

*Fig.1*

# Fig.2

# Fig.3

(a)

0.2-0.4mm

0.5-0.7mm

30-45mm

(b)

PLASTIC CASE

CARBON GENERATOR

DILUTER

MEASURING INSTRUMENT

TEST PIECE

(c)

INSTRUMENT AIR

REDUCING VALVE

MEASUREMENT REGULATOR

TEST PIECE

MANOMETER

# Fig.4

(a)

(b)

(c)

## INTERNATIONAL SEARCH REPORT

| | International application No. |
|---|---|
| | PCT/JP2012/056187 |

**A. CLASSIFICATION OF SUBJECT MATTER**
*C04B38/06*(2006.01)i, *B01D39/20*(2006.01)i, *B01D46/00*(2006.01)i, *C04B35/478* (2006.01)i, *F01N3/022*(2006.01)i, *F01N3/10*(2006.01)i, *F01N3/28*(2006.01)i

According to International Patent Classification (IPC) or to both national classification and IPC

**B. FIELDS SEARCHED**

Minimum documentation searched (classification system followed by classification symbols)
C04B38/06, B01D39/20, B01D46/00, F01N3/022, F01N3/10, F01N3/28, B01J35/04, B01J35/10

Documentation searched other than minimum documentation to the extent that such documents are included in the fields searched
Jitsuyo Shinan Koho        1922–1996   Jitsuyo Shinan Toroku Koho   1996–2012
Kokai Jitsuyo Shinan Koho  1971–2012   Toroku Jitsuyo Shinan Koho   1994–2012

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2001/079138 A1 (NGK Insulators, Ltd.), 25 October 2001 (25.10.2001), claims 1, 7, 8; description, page 9, line 23 to page 10, line 18; page 14, examples 14 to 20; table 2 & JP 2002-201082 A        & US 2003/0134084 A1 & EP 1277714 A1           & DE 60140736 D & AU 4690301 A            & PL 357671 A & ZA 200208267 A | 1-7 |
| A | JP 2009-292709 A (TYK Corp.), 17 December 2009 (17.12.2009), claims 1, 2; paragraphs [0018] to [0024]; table 1 (Family: none) | 1-7 |

☒ Further documents are listed in the continuation of Box C.      ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 26 March, 2012 (26.03.12) | 03 April, 2012 (03.04.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2012/056187

C (Continuation). DOCUMENTS CONSIDERED TO BE RELEVANT

| Category* | Citation of document, with indication, where appropriate, of the relevant passages | Relevant to claim No. |
|---|---|---|
| A | JP 2003-193820 A (Hitachi Metals, Ltd.), 09 July 2003 (09.07.2003), paragraphs [0012] to [0013]; tables 1, 2; fig. 5 & JP 2004-148308 A & US 2003/0093982 A1 & EP 1293241 A2 & EP 1733779 A2 & EP 1733780 A2 & DE 60236833 D & CN 1417455 A & CN 1900493 A & CN 1900494 A | 1-7 |
| P,X | WO 2011/115181 A1 (Sumitomo Chemical Co., Ltd.), 22 September 2011 (22.09.2011), claims 1 to 13; paragraphs [0037] to [0040], [0111] to [0126]; fig. 2, 4 (Family: none) | 1-7 |

Form PCT/ISA/210 (continuation of second sheet) (July 2009)

**EP 2 703 371 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005270755 A
- JP 2010138770 A